# EUROPEAN PATENT APPLICATION

(11) **EP 2 869 542 A1**
(43) Date of publication of application: **06.05.2015**
(21) Application number: 13809170.7
(22) Date of filing: 04.03.2013
(51) Int. Cl.: H04M 1/725

(54) **INCOMING CALL PROCESSING METHOD BASED ON MOBILE TERMINAL AND MOBILE TERMINAL**

(30) Priority: 29.06.2012 CN 201210222069
(71) Applicant: Huizhou TCL Mobile Communication Co., Ltd., Huizhou, Guangdong 516006 (CN)
(72) Inventor: YAO, Chan, HuiZhou Guangdong 516006 (CN); YU, Zhuojun, HuiZhou Guangdong 516006 (CN); WANG, Meili, HuiZhou, Guangdong 516006 (CN)
(74) Representative: Petraz, Gilberto Luigi
(86) International application number: PCT/CN2013/072115
(87) International publication number: WO 2014/000460

(57) **Abstract**

A mobile terminal and an incoming call processing method thereof are disclosed. The method comprises the following steps: controlling the incoming call controller to be shown on a pre-designated position of a screen when the mobile terminal is in a screen-locked state and the incoming call arrives; detecting by the mobile terminal whether the incoming call controller is dragged for a predetermined distance, and controlling an Answer and Decline selection interface to be shown on the screen when the incoming call controller is dragged for the predetermined distance; receiving by the mobile terminal an operating instruction from a user through the Answer and Decline selection interface and entering an in-call interface or declining the incoming call. The mobile terminal is provided with a novel function, which adopts an operation gesture performed in one direction instead of conventional operation gestures performed in opposite directions, so that the operation is made easier, and can be easily operated with one hand when driving or in emergency situations. Also, the present invention is in conformity with the design principles of a natural interactive interface: dragging out the operation button, and clicking it to operate, which brings convenience to the user.

## Description

### FIELD OF THE INVENTION

The present invention relates to the field of mobile terminals. More particularly, it relates to a mobile terminal and an incoming call processing method thereof.

### BACKGROUND OF THE INVENTION

With the development of communication technology and the improvement of people's lives, a variety of mobile terminals (such as mobile phones) have become widely utilized. Mobile phones have become indispensable communication tools for people's daily life.

Most of the existing mobile phones have been developed as touchscreen phones. Touchscreen phones provide users with operational flexibility. However, existing touchscreen phones are inconvenient to operate when a call is incoming. A user may perform an incorrect operation in some situations. In addition, existing phones usually adopt two slide gestures performed in opposite directions for answering and declining a call, which increases the operation difficulty.

Therefore, the prior art needs to be improved and developed.

### SUMMARY OF THE INVENTION

The technical problem to be solved by the present invention is to overcome the above-mentioned deficiencies in the prior art. The present invention provides a mobile terminal and an incoming call processing method thereof. An object of the present invention is to break through the limitation of a conventional operation of a mobile terminal in a screen-locked state, so as to provide an easy and reliable operation for a user, which brings convenience to the user.

The technical solution employed by the present invention for solving the mentioned technical problem is as follows:

A method of processing an incoming call in a mobile terminal, comprising the following steps:

Pre-defining an incoming call controller comprising an incoming call message and a prompting message of entering an Answer and Decline selection interface in the mobile terminal;

Controlling the incoming call controller to be shown on a pre-designated position of a screen when the mobile terminal is in a screen-locked state and an incoming call arrives; detecting by the mobile terminal whether the incoming call controller is dragged for a predetermined distance, and controlling the Answer and Decline selection interface to be shown on the screen when the incoming call controller is dragged for the predetermined distance; receiving by the mobile terminal an operating instruction from a user, and entering an in-call interface or declining the incoming call; and

Controlling the Answer and Decline selection interface to be shown on the screen when the mobile terminal is in a screen-unlocked state and an incoming call arrives, receiving by the mobile terminal the operating instruction from the user, and entering the in-call interface or declining the incoming call.

A method of processing an incoming call in a mobile terminal comprises the following steps:

Controlling an incoming call controller to be shown on a pre-designated position of a screen when the mobile terminal is in a screen-locked state and an incoming call arrives;

Detecting by the mobile terminal whether the incoming call controller is dragged for a predetermined distance, and controlling an Answer and Decline selection interface to be shown on the screen when the incoming call controller is dragged for the predetermined distance;

Receiving by the mobile terminal an operating instruction from a user through the Answer and Decline selection interface, and entering an in-call interface or declining the incoming call.

A mobile terminal, comprising:

An incoming call controller display control module for Controlling an incoming call controller to be shown on a pre-designated position of a screen when the mobile terminal is in a screen-locked state and an incoming call arrives;

A detection module for detecting whether the incoming call controller is dragged for a predetermined distance, and controlling an Answer and Decline selection interface to be shown on the screen when the incoming call controller is dragged for the predetermined distance;

An incoming call controller module for receiving an operating instruction from a user through the Answer and Decline selection interface, and entering an in-call interface or declining the incoming call.

The present invention provides a mobile terminal and an incoming call processing method thereof. When the mobile terminal is in a screen-locked state and an incoming call arrives, an incoming call controller is shown on a pre-designated position of a screen. The incoming call controller is dragged for a predetermined distance until an answer button and a decline button are completely shown on the screen, and then released for entering an Answer and Decline selection interface. A user clicks the answer button or the decline button to enter an in-call interface or decline the incoming call. The present invention provides the mobile terminal with a novel function, which adopts an operation gesture performed in one direction instead of conventional operation gestures performed in opposite directions, so that the operation is made easier, and can be easily operated with one hand when driving or in emergency situations. Also, the present invention is in conformity with the design principles of a natural interactive interfaces: dragging out the operation button and clicking it to operate, which is a more reasonable and smoother operation based upon the user's mental cognition or operation habits. Visually, a consistent design space is provided, so as to bring convenience to the user.

### BRIEF DESCRIPTION OF THE DRAWINGS

Figure 1 shows a flow diagram of a method of processing an incoming call in a mobile terminal according to a preferred embodiment of the present invention.
Figure 2 shows a processing flow chart of a method of processing an incoming call in a mobile terminal according to an embodiment of the present invention.
Figure 3 shows a structural schematic diagram of a display interface on a screen of a mobile terminal when in a screen-locked state according to a first embodiment of a method of processing an incoming call in a mobile terminal of the present invention.
Figure 4 shows a structural schematic diagram of a display interface on a screen of a mobile terminal when in a screen-locked state according to a second embodiment of a method of processing an incoming call in a mobile terminal of the present invention.
Figure 5 shows a functional block diagram of the mobile terminal according to a preferred embodiment of the present invention.

### DETAILED DESCRIPTION OF THE INVENTION

The present invention provides a mobile terminal and an incoming call processing method thereof. In order to make the objectives, technical solutions, and advantages of the present invention clearer, the present invention will be further described below with reference to the attached drawings and embodiments thereof. It should be understood that the embodiments described herein are only intended to illustrate but not to limit the present invention.

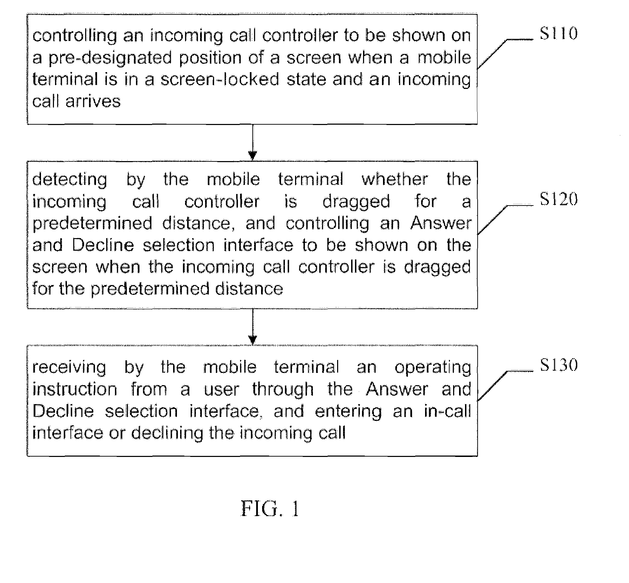

Please refer to Figure 1, which shows a flow diagram of a method of processing an incoming call in a mobile terminal according to a preferred embodiment of the present invention. As shown on Figure 1, the method of processing an incoming call in a mobile terminal comprises the following steps.

In Step S110, an incoming call controller is controlled to be shown on a pre-designated position of a screen when the mobile terminal is in a screen-locked state and the incoming call arrives.

In Step S120, the mobile terminal detects whether the incoming call controller is dragged for a predetermined distance, and controls the Answer and Decline selection interface to be shown on the screen when the incoming call controller is dragged for the predetermined distance.

In Step S130, the mobile terminal receives an operating instruction from a user through the Answer and Decline selection interface, and entering an in-call interface or declining the incoming call.

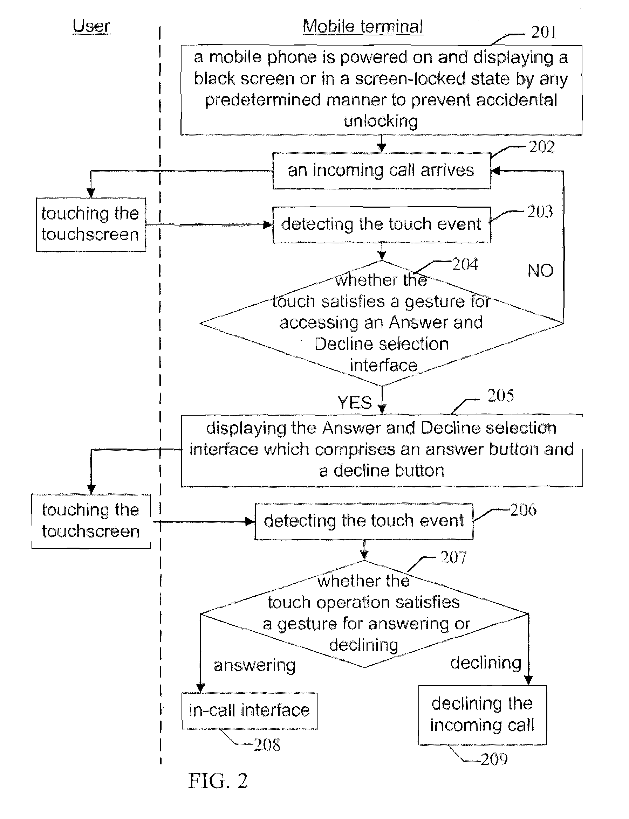

In this embodiment (the flow chart as shown on Figure 2), the mobile terminal is a mobile phone.

In Step 201, the mobile phone is powered on and displaying a black screen or in a screen-locked state by any predetermined manner to prevent accidental unlocking.

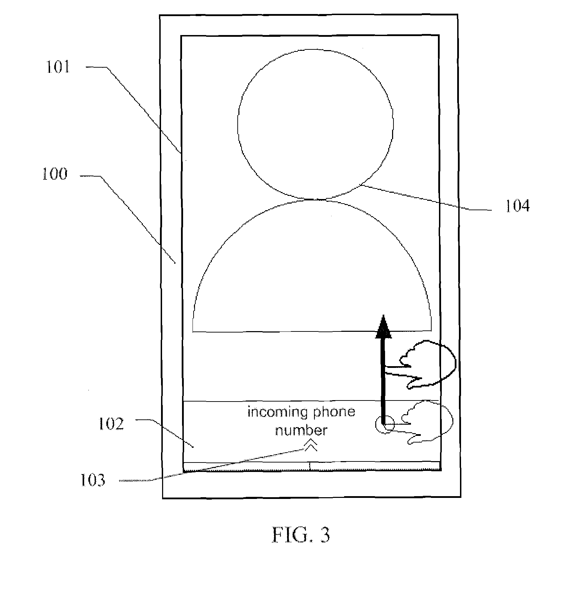

In Step 202, an incoming call arrives. That is, the incoming call controller is controlled to be shown on a pre-designated position of a screen when the mobile terminal is in a screen-locked state and the incoming call arrives. In the embodiment, as shown on Figure 3, an incoming call controller 102 is required to be pre-defined in the mobile terminal 100, the incoming call controller 102 comprises an incoming call message and a prompting message of entering an Answer and Decline selection interface. The prompting message of entering the Answer and Decline selection interface comprises, but is not limited to a text message, a picture message, or a text and picture mixed message.

As shown on Figure 3, in the embodiment, when the mobile terminal is in a screen-locked state and an incoming call arrives, an incoming call controller 102 is shown on a pre-designated position of a screen 101 of the mobile terminal 100. Also, an incoming call image 104 may be displayed. The incoming call controller 102 is bounced at the bottom of the screen 101. The incoming call controller 102 comprises an incoming call message (such as an incoming phone number) and a prompting message 103 of entering an Answer and Decline selection interface. As shown on Figure 3, the up arrow is used to prompt the user to drag the incoming call controller in an upward direction.

In Step 203, the mobile terminal detects whether the touchscreen is touched by a user. If the mobile terminal detects that a touch operation is applied on the touchscreen, then carrying out Step 204.

In Step 204, the mobile terminal judges whether the touch satisfies a gesture for entering an Answer and Decline selection interface. If yes, then carrying out Step 205. If no, then carrying out Step 202.

In Step 205, the Answer and Decline selection interface is displayed and comprises an answer button and a decline button.

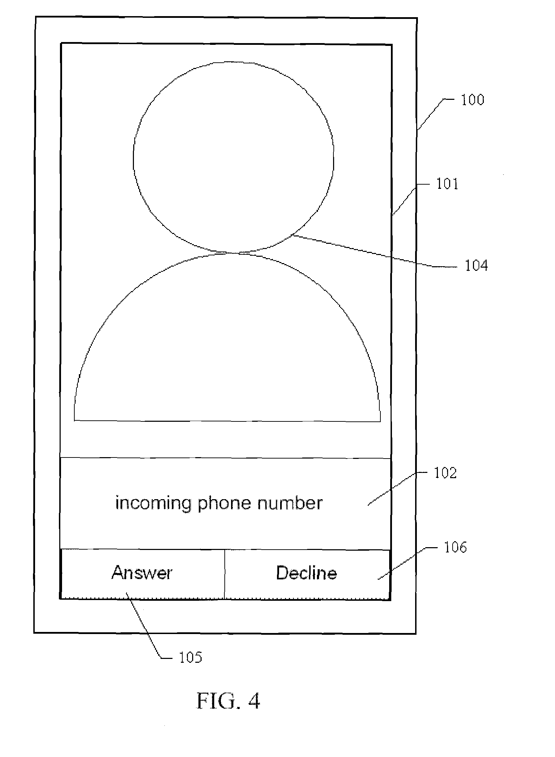

As shown on Figure 3, the definition of dragging for a predetermined distance in the embodiment is to drag for the predetermined distance on the screen in an upward direction. In the embodiment, a gesture for judging whether the touch satisfies a gesture for entering the Answer and Decline selection interface employs a gesture by dragging the incoming call controller 102 for a predetermined distance, as shown on Figure 3. The Answer and Decline selection interface is shown at the bottom of the screen, and comprises an answer button 105 and a decline button 106, as shown on Figure 4.

In Step 206, the mobile terminal detects whether the touchscreen is touched by the user for executing a touch operation to select answering or declining. If the mobile terminal detects that the touch operation is applied on the touchscreen, then carrying out Step 207.

In Step 207, it is judged whether the touch operation satisfies a gesture for answering or declining. If it satisfies an answering gesture, then carrying out Step 208, and an in-call interface is entered. If it satisfies a declining gesture, then carrying out Step 209, and the incoming call is declined. That is, the mobile terminal receives an operating instruction from a user through the Answer and Decline selection interface to select the answer button for entering an in-call interface or the decline button for declining the incoming call.

In a further embodiment, the method of processing the incoming call in the mobile terminal further comprises the following step: the Answer and Decline selection interface having the answer button and the decline button is controlled to be shown on the screen when the mobile terminal is in a screen-unlocked state and the incoming call arrives, and the mobile terminal receives the operating instruction from the user to select the answer button for entering an in-call interface or the decline button for declining the incoming call.

In the above mentioned embodiment, when the step of pre-defining the incoming call controller 102 comprising the incoming call message and the prompting message 103 of entering the Answer and Decline selection interface is implemented in the program in the mobile terminal 100, a View (the view of incoming call controller): JrdAnswerOrDeclineTab may be self-defined instead of an original View: SlidingTab. When an incoming call arrives, the self-defined View (the view of incoming call controller) of the present invention is displayed. When an incoming call arrives (Incoming call) and the mobile terminal is in the screen-locked state, the self-defined View (the view of incoming call controller) is: JrdAnswerOrDeclineTab (Lock=true). In the screen-unlocked state, the self-defined View (the view of incoming call controller) is: JrdAnswerOrDeclineTab (Lock=false).

When the mobile phone is in a screen-locked state and an incoming arrives, a View (the view of incoming call controller) comprising a prompting message of answering and declining will bounce at the bottom of the screen. The user may drag the View (the view of incoming call controller) until the Answer and Decline buttons are completely shown; then the user removes the finger, and the entire View will appear at the bottom of the screen. The user may choose to answer or decline the incoming call.

When the mobile phone is in a screen-unlocked state, the two buttons will directly show on the screen, and the user may directly choose to answer or decline the incoming call.

Therefore, the embodiment of present invention provides a method of processing an incoming call in a mobile terminal. The present invention provides a mobile terminal with a novel function, which adopts an operation gesture performed in one direction instead of conventional operation gestures performed in opposite directions, so that the operation is made easier, and can be easily operated with one hand when driving or in emergency situations. Also, the present invention is in conformity with the design principles of natural interactive interfaces: dragging out the operation button and clicking it to operate, which is a more reasonable and smoother operation based upon the user's mental cognition or operational habits. Visually, a consistent design space is provided, so as to bring convenience to the user.

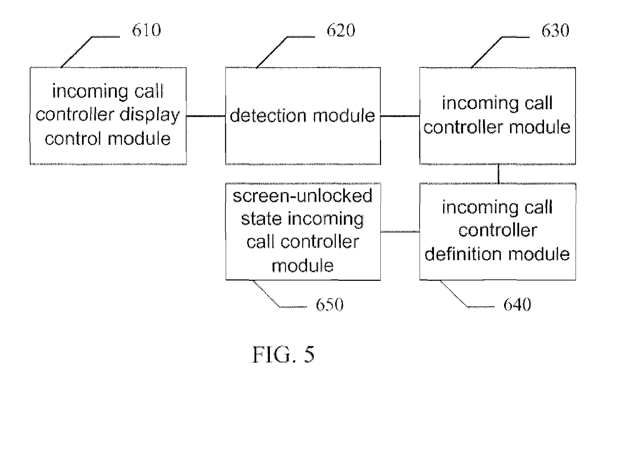

Based on the above mentioned embodiment, the present invention further provides a mobile terminal, which employs the method of processing an incoming call as described above. As shown on Figure 5, the mobile terminal comprises the following.

An incoming call controller display control module 610 is used for controlling an incoming call controller to be shown on a pre-designated position of a screen when the mobile terminal is in a screen-locked state and an incoming call arrives. The particular details are as described above.

A detection module 620 is used for detecting whether the incoming call controller is dragged for a predetermined distance. When the incoming call controller is dragged for the predetermined distance, an Answer and Decline selection interface is controlled to be shown on the screen. The particular details are as described above.

An incoming call controller module 630 is used for receiving an operating instruction from a user through the Answer and Decline selection interface, and entering an in-call interface or declining the incoming call. The particular details are as described above.

In a further embodiment, as shown on Figure 5, the mobile terminal further comprises the following.

An incoming call controller definition module 640 is used for pre-defining the incoming call controller in the mobile terminal comprising an incoming call message and a prompting message of entering the Answer and Decline selection interface. The particular details are as described above.

In a further embodiment, as shown on Figure 5, the mobile terminal further comprises a screen-unlocked state incoming call controller module 650, which is used for controlling the Answer and Decline selection interface having an answer button and a decline button to be shown on the screen when the mobile terminal is in a screen-unlocked state and an incoming call arrives. The Answer and Decline selection interface is used for receiving the operating instruction from the user to select the answer button for entering the in-call interface or the decline button for declining the incoming call. The particular details are as described above.

The prompting message of entering the Answer and Decline selection interface comprises a text message, a picture message, or a text and picture mixed message. The mobile terminal is a mobile phone.

In summary, the present invention provides a mobile terminal and an incoming call processing method thereof. When the mobile terminal is in a screen-locked state and an incoming call arrives, an incoming call controller is shown on a pre-designated position of a screen. The incoming call controller is dragged for a predetermined distance until an answer button and a decline button are completely shown on the screen, and then released for entering an Answer and Decline selection interface. User clicks the answer button or the decline button to enter an in-call interface or decline the incoming call. The present invention provides the mobile terminal with a novel function, which adopts an operation gesture performed in one direction instead of conventional operation gestures performed in opposite directions, so that the operation is made easier, and can be easily operated with one hand when driving or in emergency situations. Also, the present invention is in conformity with the design principles of a natural interactive interfaces: dragging out the operation button and clicking it to operate, which is a more reasonable and smoother operation based upon the user's mental cognition or operational habits. Visually, a consistent design space is provided, so as to bring convenience to the user.

It should be noted that the present invention is not limited by the above examples. Those of ordinary skill in the art can make improvements or variations according to the above description, and all of the improvements and variations should be all contained within the scope of the attached claims of the present invention.

## Claims

1. A method of processing an incoming call in a mobile terminal, comprising the following steps:
pre-defining an incoming call controller comprising an incoming call message and a prompting message of entering an Answer and Decline selection interface in the mobile terminal;
controlling the incoming call controller to be shown on a pre-designated position of a screen when the mobile terminal is in a screen-locked state and the incoming call arrives;
detecting by the mobile terminal whether the incoming call controller is dragged for a predetermined distance, and controlling the Answer and Decline selection interface to be shown on the screen when the incoming call controller is dragged for the predetermined distance;
receiving by the mobile terminal an operating instruction from a user, and entering an in-call interface or declining the incoming call; and
controlling the Answer and Decline selection interface to be shown on the screen when the mobile terminal is in a screen-unlocked state and the incoming call arrives, receiving by the mobile terminal the operating instruction from the user, and entering the in-call interface or declining the incoming call.

2. The method of processing the incoming call in the mobile terminal as claimed in claim 1, wherein the prompting message of entering the Answer and Decline selection interface comprises a text message, a picture message, or a text and picture mixed message.

3. The method of processing the incoming call in the mobile terminal as claimed in claim 1, wherein the step of controlling the incoming call controller to be shown on the pre-designated position of the screen when the mobile terminal is in the screen-locked state and the incoming call arrives comprises:
controlling the incoming call controller to be shown on the pre-designated position of the screen, and controlling the incoming call controller to be bounced at a bottom of the screen when the mobile terminal is in the screen-locked state and the incoming call arrives.

4. The method of processing the incoming call in the mobile terminal as claimed in claim 1, wherein the Answer and Decline selection interface comprises an answer button and a decline button.

5. A method of processing an incoming call in a mobile terminal, comprising the following steps:
controlling an incoming call controller to be shown on a pre-designated position of a screen when the mobile terminal is in a screen-locked state and the incoming call arrives;
detecting by the mobile terminal whether the incoming call controller is dragged for a predetermined distance, and controlling an Answer and Decline selection interface to be shown on the screen when the incoming call controller is dragged for the predetermined distance;
receiving by the mobile terminal an operating instruction from a user through the Answer and Decline selection interface, and entering an in-call interface or declining the incoming call.

6. The method of processing the incoming call in the mobile terminal as claimed in claim 5, wherein before the step of controlling the incoming call controller to be shown on the pre-designated position of the screen when the mobile terminal is in the screen-locked state and the incoming call arrives further comprises:
pre-defining the incoming call controller comprising an incoming call message and a prompting message of entering the Answer and Decline selection interface in the mobile terminal.

7. The method of processing the incoming call in the mobile terminal as claimed in claim 6, wherein the prompting message of entering the Answer and Decline selection interface comprises a text message, a picture message, or a text and picture mixed message.

8. The method of processing the incoming call in the mobile terminal as claimed in claim 5, wherein the step of controlling the incoming call controller to be shown on the pre-designated position of the screen when the mobile terminal is in the lock state and the incoming call arrives comprises:
controlling the incoming call controller to be shown on the pre-desjgnated position of the screen, and controlling the incoming call controller to be bounced at a bottom of the screen when the mobile terminal is in the screen-locked state and the incoming call arrives.

9. The method of processing the incoming call in the mobile terminal as claimed in claim 5, wherein the Answer and Decline selection interface comprises an answer button and a decline button.

10. The method of processing the incoming call in the mobile terminal as claimed in claim 5, wherein the method of processing the incoming call in the mobile terminal further comprises:
controlling the Answer and Decline selection interface to be shown on the screen when the mobile terminal is in a screen-unlocked state and the incoming call arrives, receiving by the mobile terminal the operating instruction from the user, and entering the in-call interface or declining the incoming call.

11. A mobile terminal, comprising:
an incoming call controller display control module for controlling an incoming call controller to be shown on a pre-designated position of a screen when the mobile terminal is in a screen-locked state and an incoming call arrives;
a detection module for detecting whether the incoming call controller is dragged for a predetermined distance, and controlling an Answer and Decline selection interface to be shown on the screen when the incoming call controller is dragged for the predetermined distance;
an incoming call controller module for receiving an operating instruction from a user through the Answer and Decline selection interface, and entering an in-call interface or declining the incoming call.

12. The mobile terminal as claimed in claim 11, wherein the mobile terminal further comprises:
an incoming call controller definition module for pre-defining the incoming call controller comprising an incoming call message and a prompting message of entering the Answer and Decline selection interface in the mobile terminal.

13. The mobile terminal as claimed in claim 12, wherein the prompting message of entering the Answer and Decline selection interface comprises a text message, a picture message, or a text and picture mixed message.

14. The mobile terminal as claimed in claim 12, wherein the mobile terminal is a mobile phone.

15. The mobile terminal as claimed in claim 11, wherein the incoming call controller display control module is used for controlling the incoming call controller to be shown on the pre-designated position of the screen, and controlling the incoming call controller to be bounced at a bottom of the screen when the mobile terminal is in the screen-locked state and the incoming call arrives.

16. The mobile terminal as claimed in claim 11, wherein the Answer and Decline selection interface comprises an answer button and a decline button.

17. The mobile terminal as claimed in claim 11, wherein the mobile terminal further comprises:
a screen-unlocked state incoming call controller module used for controlling the Answer and Decline selection interface to be shown on the screen when the mobile terminal is in an unlock state and the incoming call arrives, and the mobile terminal receiving the operating instruction from the user, and entering the in-call interface or declining the incoming call.
